# EUROPEAN PATENT APPLICATION

(11) **EP 4 749 458 A1**
(43) Date of publication of application: **27.05.2026**
(21) Application number: 25217332.3
(22) Date of filing: 20.11.2025
(51) Int. Cl.: G06F 9/50

(54) **SYSTEMIC PERFORMANCE IMPROVEMENT FOR RETRIEVAL-AUGMENTED GENERATION SERVING**

(30) Priority: 22.11.2024 US 202463724018 P; 04.11.2025 US 202519378459
(71) Applicant: Google LLC, Mountain View, CA 94043 (US)
(72) Inventor: Yazdanbakhsh, Amir, Mountain View, California, 94043 (US); Dadu, Vidushi, Mountain View, California, 94043 (US); Jiang, Wenqi, Santa Clara, California, 95051 (US); Subramanian, Suvinay, Mountain View, California, 94043 (US)
(74) Representative: Betten & Resch

(57) **Abstract**

Aspects of the disclosure are directed to enhancing RAG through a structured schema for RAG that captures a wider range of RAG techniques to serve as a foundation for improving performance and an optimization framework for efficiently serving the wider range of RAG techniques based on significant performance variability across RAG workloads. The optimization framework may achieve up to a 2x increase or more in query per second (QPS) per chip compared to alternative RAG frameworks built on LLM-system extensions.

## Description

### CROSS-REFERENCE TO RELATED APPLICATIONS

The present application claims the benefit of the filing date of U.S. Provisional Patent Application No. 63/724,018, filed November 22, 2024, the disclosure of which is hereby incorporated herein by reference.

### BACKGROUND

The rapid adoption of large language models (LLMs) across diverse applications, such as question answering, code generation, and scientific discoveries, highlights their profound impact on automating knowledge-based tasks. Despite these capabilities, LLM systems, when deployed in isolation without context, face substantial challenges, such as data staleness, a propensity to hallucinate, e.g., generating factually incorrect or nonsensical information, and limited, often rigid model knowledge. These challenges hinder the reliability and adaptability of LLM-only systems, especially in applications that demand high factual accuracy.

Retrieval-augmented generation (RAG) has emerged as a powerful solution to address the common pitfalls of LLM-only systems for knowledge-intensive tasks. By retrieving information from additional databases and appending the information to prompts, RAG enhances the credibility, timeliness, and contextually rich nature of LLM-generated responses. Leveraging the generative prowess of LLMs alongside external knowledge sources, RAG not only achieves comparable quality to LLM-only systems with smaller models but also simplifies the process of updating knowledge, mitigating the extent of additional model training, which is often prohibitively expensive.

In contrast to LLM-only serving systems, which center on optimizing the prompt decoding and token generation stages, RAG presents additional problems. RAG systems are intrinsically heterogeneous, including a diverse array of system components, including vector search-based retrieval, generative LLMs, and multiple other models such as database encoders, query rewriters, and retrieval result rerankers. These components often run on heterogeneous hardware platforms. For example, retrievals are typically performed on CPU-based servers while model serving is performed on ML accelerators, e.g., FPGAs, ASICs, and/or GPUs. This interplay of diverse components and hardware platforms increases the search space for configuring RAG systems, far surpassing search spaces for configuring LLM-only systems. Further, RAG configurations exhibit substantial performance variability based on multiple factors, such as database size, retrieval frequency, model selection, and serving hardware. This variability can cause bottlenecks between inference and retrieval or among different models within the serving pipeline.

### BRIEF SUMMARY

Aspects of the disclosure are directed to enhancing RAG through a structured schema for RAG that captures a wider range of RAG techniques to serve as a foundation for improving performance and an optimization framework for efficiently serving the wider range of RAG techniques based on significant performance variability across RAG workloads. The optimization framework may achieve up to a 2x increase or more in query per second (QPS) per chip compared to alternative RAG frameworks built on LLM-system extensions.

An aspect of the disclosure provides for a method for processing workloads using retrieval augmented generation (RAG)-based models, the method including: receiving, by one or more processors, a workload request and a resource constraint for processing the workload; converting, by the one or more processors, the workload request into a structured schema representing an RAG configuration space; selecting, by the one or more processors, an RAG-based model configuration for processing the workload based on the structured schema and the resource constraint; generating, by the one or more processors, a workload response for the workload using the RAG-based model configuration; and outputting, by the one or more processors, the workload response.

Another aspect of the disclosure provides for a system including: one or more processors; and one or more storage devices coupled to the one or more processors and storing instructions that, when executed by the one or more processors, cause the one or more processors to perform operations for the method for processing workloads using retrieval augmented generation (RAG)-based models. Yet another aspect of the disclosure provides for a non-transitory computer readable medium storing instructions that, when executed by one or more processors, cause the one or more processors to perform operations for the method for processing workloads using retrieval augmented generation (RAG)-based models.

In some examples, the structured schema includes a specification of an RAG pipeline and model and retrieval configurations for the RAG pipeline. In some examples, the specification of the RAG pipeline includes a database encoder stage, a query rewriter stage, a result reranker stage, an iterative retrieval stage, and a generative model stage. In some examples, the model and retrieval configurations include a model size, a database size, a number of query vectors per retrieval, and an iterative retrieval frequency.

In some examples, converting the workload request into the structured schema further includes determining relevant RAG pipeline stages and relevant configurations of the RAG pipeline stages based on the workload request.

In some examples, selecting the RAG-based model configuration includes: at least one of collocating or disaggregating a plurality of RAG pipeline stages based on the resource constraint; assigning a type and quantity of compute resources for each of the RAG pipeline stages based on the collocation or disaggregation of the RAG pipeline stages and the resource constraint; and tuning batch sizes for each of the RAG pipeline stages to balance throughput and latency for processing the workload. In some examples, selecting the RAG-based model configuration includes determining an execution order for the workload request based on the collocation or disaggregation of the RAG pipeline stages.

In some examples, selecting the RAG-based model configuration includes identifying a performance Pareto frontier based on the workload request and the resource constraint.

In some examples, the RAG-based models are large language models (LLMs) augmented with a knowledge database. In some examples, the RAG-based models are configured to perform at least one of hyperscale retrieval, long-context sequence processing, iterative retrieval, or query rewriting and result reranking in generating the workload response.

### BRIEF DESCRIPTION OF THE DRAWINGS

FIG. 1 depicts a block diagram of an example cloud dataset platform according to aspects of the disclosure.
FIG. 2 depicts a block diagram of an example RAG workload scheduling system according to aspects of the disclosure.
FIG. 3 depicts a block diagram of an example environment for implementing a RAG workload scheduling system according to aspects of the disclosure.
FIG. 4 depicts a block diagram of one or more machine learning model architectures according to aspects of the disclosure.
FIG. 5 depicts a flow diagram of an example process for processing workloads using RAG-based models according to aspects of the disclosure.

### DETAILED DESCRIPTION

The technology relates to improving RAG serving performance by encapsulating diverse RAG workloads through a structured schema and by more efficiently serving RAG techniques through an optimization framework.

The structured schema may encapsulate a set of performance-relevant workload attributes, including a specification of the RAG pipeline as well as model and retrieval configurations. The specification of the RAG pipeline may include a document encoder, a query rewriter, a result reranker, and a generative LLM. The model and retrieval configurations may include model size, database size, number of query vectors per retrieval, and iterative retrieval frequency. The structured schema may simplify the representation of complex RAG workloads while providing sufficient information for performance characterization and optimization.

The structured schema may also allow for performing detailed workload characterizations to identify bottlenecks and determine system configurations. For example, the structured schema may allow for analyzing representative RAG paradigms, such as RAG with hyperscale retrieval, RAG for long-context sequence processing, RAG with iterative retrieval, and RAG with query rewriter and retrieval reranker models. Analyzing the representative RAG paradigms may indicate significant performance variability both across and within paradigms. For example, bottlenecks shift between retrieval and inference across RAG paradigms. For instance, hyperscale retrieval can spend over 80% in retrieval while in long-context scenarios, retrieval accounts for less than 1% of the total latency. As another example, even smaller models within the RAG pipeline can significantly influence system performance. For instance, in long-context processing, a database encoder that is orders of magnitude smaller than the main generative LLM can become a bottleneck due to the large number of tokens it processes. As yet another example, iterative retrievals during decoding can stall the RAG pipeline, as the decoding process waits for retrieval results.

The optimization framework processes a scheduling policy space based on a RAG workload represented by the structured schema and system resource constraints to determine schedules aligned with performance objectives. The scheduling decisions may include task placement, resource allocation, and batching policies. The task placement may include collocating or disaggregating inference components across hardware accelerators. The resource allocation may include assigning a type and quantity of resources to each inference component. The batching policies may include tuning batch sizes for retrieval and inference tasks to balance throughput and latency. The optimization framework implements an analytical cost model to identify a performance Pareto frontier and generate corresponding schedules for the RAG workload. The optimization framework may achieve up to a 2x increase in QPS per chip and a 55% reduction in time-to-first-token latency compared to alternative RAG frameworks built on LLM-only systems.

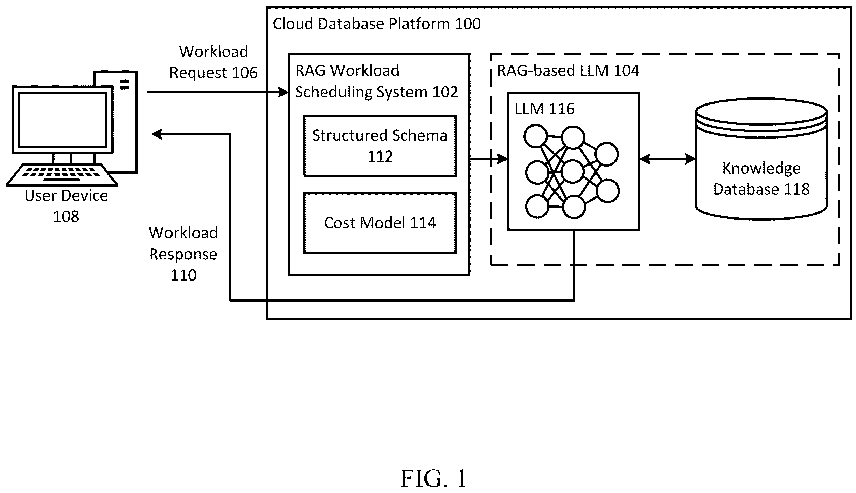

FIG. 1 depicts a block diagram of an example cloud database platform 100. The cloud database platform 100 can be part of a cloud computing system for cloud computing services such as infrastructure as a service, platform as a service, and/or software as a service. For example, the cloud database platform 100 can provide applications for accounting, word processing, inventory tracking, fraud detection, file sharing, video sharing, audio sharing, map generation, search, communication, and/or gaming.

The cloud database platform 100 may include an RAG workload scheduling system 102 for determining system configurations for processing workloads and an RAG-based LLM 104 for processing the workloads based on the system configurations. The workloads may include any artificial intelligence or machine learning based task, including regression, ranking, classification, recommendation, summarization, and/or other analysis, as examples. The RAG workload scheduling system 102 may receive a workload request 106 from a user device 108 or other upstream device (not shown) and determine a configuration for responding to the workload using the RAG workload scheduling system 102. The RAG-based LLM 104 may process the workload based on the configuration to generate a workload response 110. The workload response 110 may be output back to the user device 108 or to another downstream device (not shown). The user device 108 may be any computing device, such as a desktop computer, laptop, tablet, mobile device, e.g., smartphone, and/or wearable device, e.g., smartwatch and/or smart glasses.

The RAG workload scheduling system 102 may implement a structured schema 112 and a cost model 114 for determining configurations for processing workloads. The structured schema 112 may capture performance-relevant workload attributes, including a specification of the workload pipeline for the RAG-based LLM 104 as well as model and retrieval configurations for the RAG-based LLM 104. The cost model 114 may identify the Pareto frontier for performance for scheduling a particular workload based on the structured schema 112 and resource constraints.

The RAG-based LLM 104 may implement an LLM 116 augmented with a knowledge database 118. While shown as part of the cloud database platform 100 in FIG. 1, alternatively or additionally, the RAG-based LLM 104, including the LLM 116 and/or the knowledge database 118, may be separate from the cloud database platform 100. The LLM 116 may utilize information from the knowledge database 118, appended to the workload request 106, to process the workload request 106 and generate the workload response 110. The knowledge database 118 may be any type of storage repository and/or collection of data, such as a data warehouse, data lake, and/or data lakehouse.

LLM-only systems often struggle to achieve high factual accuracy and to provide up-to-date information. The RAG-based LLM 104 addresses these limitations by combining the linguistic capabilities of LLMs with real-time knowledge retrieval. During offline pre-processing, external knowledge is encoded as vectors using an LLM and stored in a vector database, such as the knowledge database 118. At serving time, relevant knowledge is retrieved via vector search, assessing relevance by comparing the similarity between a vector representation of the workload request 106 and those in the knowledge database 118. The retrieved knowledge is then appended to the workload request 106, refining the quality of the workload response 110.

The RAG-based LLM 104 offers several advantages over LLM-only systems for knowledge-intensive tasks. For example, the RAG-based LLM 104 simplifies knowledge updates by allowing the knowledge database 118 to be modified independently, unlike LLMs, which require retraining or fine-tuning. As another example, the RAG-based LLM 104 reduces hallucinations, where LLMs may generate factually incorrect or entirely fictitious information. The RAG-based LLM 104 implementation with the up-to-date knowledge database 118 helps mitigate these errors by grounding the output in real, retrievable data. As yet another example, the RAG-based LLM 104 may achieve comparable or better generation quality with models that are one to two orders of magnitude smaller than LLMs. While conventional LLMs implement extensive parameters to encode a vast range of general knowledge, the RAG-based LLM 104 partially offloads this knowledge storage to the knowledge database 118, retrieving only the most relevant content during inference.

The RAG-based LLM 104 involves knowledge retrieval, which identifies information from knowledge databases, typically through vector search. Vector search enables the RAG-based LLM 104 to assess semantic relevance by encoding both documents and queries as high-dimensional vectors, e.g., hundreds to thousands dimensions, where proximity in this vector space reflects semantic similarity. Vector search retrieves the 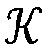 most similar vectors to a given D-dimensional query vector x from a database *Y* populated with many 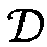 -dimensional vectors. This similarity is computed using metrics such as L2 distance or cosine similarity. Since exact 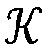 Nearest Neighbor (KNN) search is costly on large-scale datasets, vector search may adopt Approximate Nearest Neighbor (ANN) search, which provides a scalable alternative to exact KNN by trading recall for much higher system performance. For example, inverted file index-product quantization (IVF-PQ) may be utilized for vector search, due to its memory efficiency, e.g., one byte can represent 4-16 dimensions in PQ, which is helpful when the RAG-based LLM 104 operates on larger databases, e.g., those containing up to 64 billion vectors.

Serving LLM-only systems typically involves two distinct stages: prefix (prompt computation) and decode (token generation). The prefix stage processes the input prompt to generate the first output token and populate the associated key-value (KV) cache, which holds the encoded representation of the input context. The decode stage, on the other hand, generates subsequent tokens one at a time in an auto-regressive manner, relying on the KV cache from the prefix stage. LLM-only systems often disaggregate these stages, running them on separate accelerators to accommodate their distinct workload characteristics. The prefix stage processes the input sequence entirely at once, making it highly compute-intensive. Even with small batches, the prefix stage benefits from accelerators with high computational throughput to handle the full sequence length efficiently. In contrast, the decode stage is memory-bound, as each inference step requires accessing the KV cache of previous tokens, while the amount of computation is smaller. In addition to workload differences, these two phases affect different performance metrics with different SLAs: time-to-first-token (TTFT) for the prefix phase and time-per-output-token (TPOT) for the decode phase. Ultimately, optimizing the performance of LLM-only serving often depends on efficient resource allocation between the prefix and decode stages.

By contrast, serving using the RAG-based LLM 104 may involve more diverse and complex stages than serving using the LLM only. As examples, the RAG-based LLM 104 may utilize hyperscale retrieval, long-context sequence processing, iterative retrievals, and/or query rewriting and reranking.

Hyperscale retrieval may involve retrieval over a large-scale corpus combined with smaller LLMs. The RAG-based LLM 104 can match or even surpass the quality of LLM-only systems when database sizes are sufficiently large. This is achieved while using sufficiently smaller models, approximately one-tenth the parameters of their LLM-only counterparts, as an example. This quality parity is achieved because LLM-only models rely on their vast parameter sets to encode comprehensive knowledge during training, whereas the RAG-based LLM 104 dynamically integrates knowledge at inference time, reducing the need for extensive parameterization within the model itself. However, hyperscale retrieval can pose a significant bottleneck in RAG pipelines. This bottleneck becomes increasingly dominant with smaller LLMs, multi-query retrievals, better inference accelerators, shorter prefix and decode sequence lengths, and/or higher retrieval quality due to the large sizes of the databases.

The RAG-based LLM 104 can facilitate long-context processing. For example, when answering questions based on a lengthy document, e.g., with more than 100K tokens, that a user has uploaded in real time, a straightforward approach is to include the entire document in the prompt. However, this approach is often prohibitively expensive due to the large number of tokens to process. Instead, an efficient alternative is to treat the user-provided long document as the knowledge database 118, retrieving only the relevant information needed to answer the questions. This reduces the prompt size by avoiding the need to load the full text into the context window of the model. This can achieve similar response quality to using the full document as a prompt, providing a practical balance between cost and quality in handling long contexts. Long-context processing involves a database encoder for constructing the knowledge database when the long context is initially provided and the knowledge database is orders of magnitude smaller. For example, given a context length of 100K tokens and a passage chunk size of 100 tokens, the knowledge database may include 1K vectors, compared to tens to hundreds of billions of vectors in hyperscale retrieval. With long-context processing, retrieval performance plays a minimal role. Instead, the database vector encoding process emerges as the bottleneck, even with a small encoder model, due to the significantly longer context the encoder must process compared to the generative LLM.

While a single retrieval at the beginning may suffice in some scenarios, iterative retrievals that periodically update retrieved content during generation can significantly enhance model quality. Such updates of the retrieved content is particularly valuable in scenarios requiring multi-hop reasoning, where each retrieval provides additional context to guide the subsequent token generation process. In this configuration, the decoder initiates retrievals at flexible intervals during generation. Upon issuing a retrieval, the generation of this sequence temporarily pauses the token generation to process newly retrieved content through the prefix phase. Only after integrating this additional context does the decoder continue generating the rest of the sequence. Batch sizes for iterative retrievals must be carefully selected, as they significantly impact latency. Larger batch sizes improve retrieval and prefix throughput but may stall decoding.

Users often pose vague or complex queries, making it challenging to retrieve relevant information directly. To address this, the retrieval process can be significantly improved by incorporating pre-processing and post-processing steps. For pre-processing, leveraging an LLM to rewrite the query can improve retrieval quality. This LLM may either rephrase the query for clarity or decompose complex questions into multiple simpler queries that cover various aspects of the original intent of the query. Once the initial results are retrieved through vector search, a reranking model can be applied as a post-processing step. The reranker improves content retrieval quality by scoring the relevance of retrieved content, rather than performing simple vector similarity and choosing content that more closely align with the query based on the relevance score. While the reranker has a negligible impact on overall RAG performance, the query rewriter can significantly increase latency due to its autoregressive nature.

Given these diverse paradigms, with varying advantages and bottlenecks, workloads for the RAG-based LLM 104 exhibit significant variability across configurations. For example, retrieval configurations may vary dramatically, where database sizes may span several orders of magnitude, e.g., a million times, a retrieval may involve not a single query vector but multiple ones, and/or some models may support iterative retrievals during the generation process. As another example, the RAG-based LLM 104 may include several models in addition to the main generative LLM 116. These auxiliary models may include a database encoder for processing real-time uploaded documents, a query rewriter model to rephrase user queries, and/or a result reranker model to score retrieved information.

To navigate the complex RAG configuration space, the RAG workload scheduling system includes a structured schema 112 to capture the performance-relevant attributes of various workloads. The structured schema 112 may define both the execution flow of the RAG pipeline and the configuration of its components. For the RAG pipeline definition, optional stages, such as the database encoder, query rewriter, reranker, and/or iterative retrieval, can be included or omitted. For each included component, the structured schema 112 specifies relevant configurations, including model parameter counts, vector dimensionality, number of database vectors, queries per vector, and iterative retrieval frequency, as examples, if applicable.

The structured schema 112 may include components, such as document encoder, vector dimensionality, database vector number, retrieval frequency, queries per retrieval, query rewriter, query reranker, and generative LLM. Document encoder may include attributes associated with model size or parameters of the encoder used to convert database documents and queries into representations. Vector dimensionality may include attributes associated with the number of dimensions for each database vector. Database vector number may include attributes associated with the number of database vectors, depending on the corpus size and passage chunk lengths. Retrieval frequency may include attributes associated with whether iterative retrievals are permitted during decoding and the number of retrievals per sequence. Queries per retrieval may include attributes associated with the number of query vectors used per retrieval, e.g., one or multiple. Query rewriter may include attributes associated with the model size of the generative query rewriter. Query reranker may include attributes associated with the model size of the retrieval results reranker, such as an encoder-only model. Generative LLM may include attributes associated with the model size of the main generative LLM used for workload response generation.

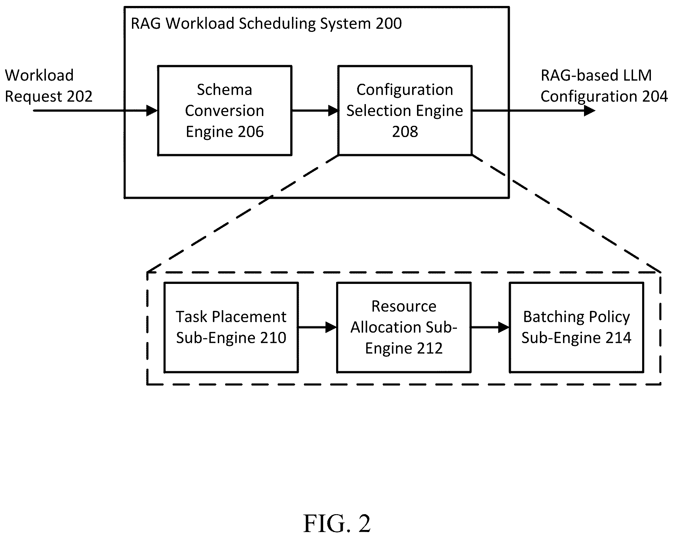

FIG. 2 depicts a block diagram of an example RAG workload scheduling system 200 for determining RAG configurations for processing workloads. The RAG workload scheduling system 200 may determine an optimized scheduling policy tailored to a specific structured schema and performance target for a workload. The RAG workload scheduling system 200 may be implemented on one or more computing devices in one or more locations. The RAG workload scheduling system 200 may correspond to the RAG workload scheduling system 102 as depicted in FIG. 1.

The RAG workload scheduling system 200 can be configured to receive input data, including workload requests 202. The workload requests 202 may include instructions and/or prompts to perform one or more tasks using an LLM. The tasks can be for any analytical and/or machine learning tasks, such as regression, ranking, classification, recommendation, summarization, question-answering, and/or any other analysis. The workload requests 202 may include text, images, and/or video. The workload requests 202 may also include hardware or other resource constraints for performing the workload using the LLM. The resource constraints may include a maximum computational resource amount, a minimum quality for a workload response, a minimum speed to generate a workload response, a maximum time limit to generate a workload response, and/or other service level optimizations, as examples.

The RAG workload scheduling system 200 may receive the workload requests 202 as part of a call to an application programming interface (API) exposing the RAG workload scheduling system 200 to one or more computing devices. The RAG workload scheduling system 200 may also receive the workload requests 202 through a storage medium, such as remote storage connected to one or more computing devices over a network. The RAG workload scheduling system 200 may further receive the workload requests 202 through a user interface on a client computing device coupled to the RAG workload scheduling system 200.

Based on the workload requests 202, the RAG workload scheduling system 200 may generate output data, including RAG-based LLM configurations 204 for generating workload responses. The workload responses may be results for the tasks, e.g., the analytical and/or machine learning tasks. The configurations 204 may include a plan for how an RAG-based LLM processes the workload requests 202 to generate the respective workload responses. For example, the configurations 204 may include which components of the RAG-based LLM are selected to process the workload requests and how the selected components are utilized through available computing resources to process the workload requests.

The RAG workload scheduling system 200 may be configured to send the RAG-based LLM configurations 204 for display on a client or user display. The RAG workload scheduling system 200 may also be configured to provide the RAG-based LLM configurations 204 as a set of computer-readable instructions, such as one or more computer programs for performing analytical and/or machine learning tasks. The computer programs may be written in any type of programming language, and according to any programming paradigm, e.g., declarative, procedural, assembly, object-oriented, data-oriented, functional, or imperative. The computer programs may be written to perform one or more different functions and to operate within a computing environment, e.g., on a physical device, virtual machine, or across multiple devices. The computer programs may also implement functionality described herein, for example, as performed by a system, engine, module, or model. The RAG workload scheduling system 200 may further be configured to forward the RAG-based LLM configurations 204 to one or more other devices configured for translating the RAG-based LLM configurations 204 for display or into an executable program written in a computer programming language for performing analytical and/or machine learning tasks. The RAG workload scheduling system 200 may also be configured to send the RAG-based LLM configurations 204 to a storage device for storage and later retrieval.

The RAG workload scheduling system 200 may include a schema conversion engine 206 and a configuration selection engine 208. The schema conversion engine 206 and configuration selection engine 208 may be implemented as one or more computer programs, specially configured electronic circuitry, or any combination thereof.

The schema conversion engine 206 may be configured to convert the workload requests 202 into the structured schema representing the RAG configuration space. The structured schema may correspond to the structured schema 112 as depicted in FIG. 1, which captures the performance-relevant attributes of the workload requests 202. The schema conversion engine 206 may represent the workload requests 202 through the execution flow of the RAG pipeline and configuration of the RAG components. The schema conversion engine 206 may determine relevant RAG pipeline stages and relevant configurations of the stages based on the workload requests 202. For example, the schema conversion engine 206 may determine the query rewriter and query reranker are relevant for some workload requests 202 but not relevant for others. As another example, the schema conversion engine 206 may determine iterative retrieval frequency is relevant for some workload requests 202 but not relevant for others. The schema conversion engine 206 may provide the workload requests 202 in the structured schema, indicating the relevant stages and configurations, to the configuration selection engine 208. The schema conversion engine 206 simplifies the representation of the workload requests 202 while providing sufficient information to optimize the configuration for processing the workload requests 202.

The configuration selection engine 208 may be configured to select RAG-based LLM configurations 204 for processing workload requests 202 based on the workload requests 202 represented in the structured schema as well as hardware or other resource constraints for processing the workload requests 202. For example, given a resource constraint of 36 processing units, for a particular workload request, the configuration selection engine 208 may adopt a hybrid collocation-disaggregation task placement strategy. Specifically, the pipeline may be organized into two collocated subsystems. The first subsystem may be the rewrite-prefix and rewrite-decode phases and the second subsystem may be the rerank and prefix phases of the workload response generation. This configuration may ensure that tightly coupled tasks are efficiently grouped. Further, the configuration selection engine 208 may tailor resource allocation to the computational demands of each subsystem. Here, for example, the configuration selection engine 208 may assign the query rewriter 4 processing units, the query reranker 16 processing units, and the decoding phase 16 processing units, given the higher computational power requirements of the reranker and the decoding phase. In addition, the configuration selection engine 208 may assign batching policies particular to the characteristics of each phase. Here, for example, the configuration selection engine 208 prioritizes low-latency processing in the rerank and prefix phases with a batch size of one, whereas the configuration selection engine 208 increases, e.g., maximizes, throughput in the decoding phase with a much larger batch size of 128. The configuration selection engine 208 may include a task placement sub-engine 210, a resource allocation sub-engine 212, and a batching policy sub-engine 214 to determine the RAG-based LLM configurations 204 to select for respective workload requests 202.

The task placement sub-engine 210 may be configured to determine a task placement for each of the phases utilized in workload requests 202. The task placement sub-engine 210 may determine whether to collocate and/or disaggregate the phases based on the resource constraints. The task placement sub-engine 210 may support hybrid collocation-disaggregation task placement policies to balance flexibility and performance. The task placement sub-engine 210 may determine to keep the prefix and decode phases of the LLM disaggregated. The task placement sub-engine 210 may also determine to keep retrieval disaggregated, since the retrieval stage typically operates on lower intensity processing units, e.g., CPUs, rather than higher intensity processing units, e.g., hardware accelerators. The task placement sub-engine 210 may further determine to collocate neighboring phases up to the prefix phase, based on the resource constraints. The task placement sub-engine 210 may also restrict collocation to adjacent neighboring stages to avoid complicating the search space.

The resource allocation sub-engine 212 may be configured to assign compute resources to each phase based on the determined task placement, along with computational and memory requirements of each phase. For collocated inference phases, the resource allocation sub-engine 212 may select a number of accelerators to ensure efficient execution of the workload requests 202. For retrieval operations, the resource allocation sub-engine 212 may select a number of CPU servers to meet workload demands. The resource allocation sub-engine 212 may balance throughput requirements with latency constraints to ensure sufficient performance. Further, the resource allocation sub-engine 212 may ensure each component has a sufficient accelerator or CPU memory capacity to store the models or database segments while meeting performance targets.

Based on a batch of incoming workload requests 202, the batching policy sub-engine 214 may be configured to determine batch sizes to balance latency and throughput at each stage. The batching policy sub-engine 214 may determine to use the same batch size for all stages before decoding or divide the workload requests 202 into micro-batches with the same or different batch sizes. For the decode stage, the batching policy sub-engine 214 may leverage continuous batching to use larger batch sizes to improve throughput. For iterative retrievals, the batching policy sub-engine 214 may allow for distinct batch sizes for the initial retrieval/prefix pair and the subsequent decoder-initiated retrieval/prefix iterations, given the former impacts latency while the latter impacts throughput.

Given the determined batch sizes, the batching policy sub-engine 214 may organize execution order of the workload requests 202 to increase efficiency based on the task placement strategy. For example, in a fully disaggregated configuration, the batching policy sub-engine 214 utilizes a consecutive execution, where in response to sufficient inputs arriving for a subsystem and the subsystem completing its previous batch, the subsystem then processes the new batch and forwards the output to the next subsystem. As another example, for a collocated configuration, the batching policy sub-engine 214 utilizes a time-multiplexing execution, where the throughput of the collocated system is fixed based on the batch sizes. Here, a stage begins execution in response to accumulating sufficient input. The batching policy sub-engine 214 may prioritize completing the final stage early over processing another round of a previous stage, thereby reducing the average completion time of the final stage. If a retrieval operation is included between collocated stages, e.g., between the rewrite and prefix stages, the batch policy sub-engine 214 may determine to pause execution until the retrieval phase is complete before resuming the next collocated model inference phase.

Based on a workload request and resource constraints, the configuration selection engine 208 may perform an exhaustive search across schedules using a cost model to identify Pareto frontier for performance metrics, e.g., throughput and latency. The cost model may perform performance profiling by evaluating each stage individually and under varying resource allocations and batch sizes. The cost model may explore candidate schedules based on the collocation strategies, resource allocation strategies, and batching strategies for each component. The cost model may calculate end-to-end performance for each schedule and identify the Pareto frontier along with the corresponding schedule configurations. The configuration selection engine 208 may select the RAG-based LLM configurations 204 for respective workload requests 202 based on the Pareto frontiers.

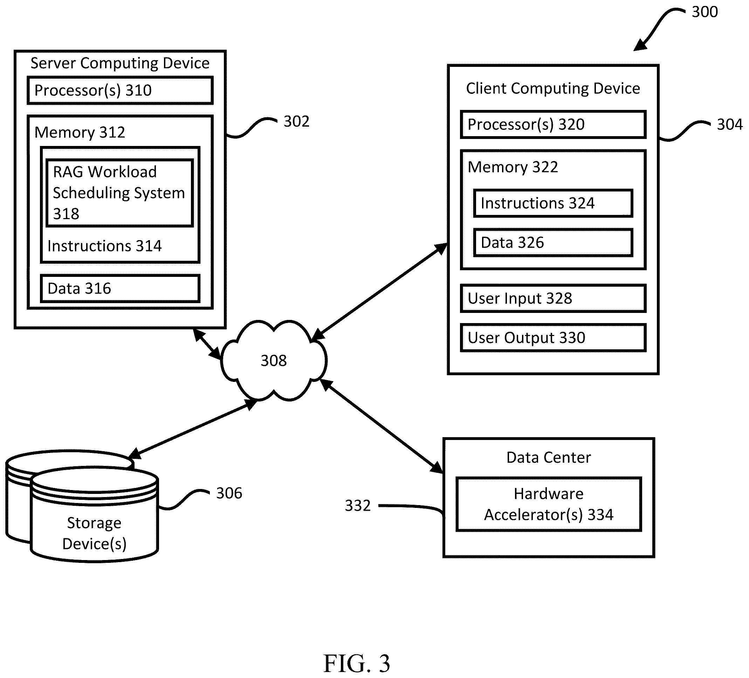

FIG. 3 depicts a block diagram of an example environment 300 for implementing an RAG workload scheduling system 318. The RAG workload scheduling system 318 can be implemented on one or more devices having one or more processors in one or more locations, such as in server computing device 302. A client computing device 304 and the server computing device 302 can be communicatively coupled to one or more storage devices 306 over a network 308. The storage devices 306 can be a combination of volatile and non-volatile memory and can be at the same or different physical locations than the computing devices 302, 304. For example, the storage devices 306 can include any type of non-transitory computer readable medium capable of storing information, such as a hard-drive, solid state drive, tape drive, optical storage, memory card, ROM, RAM, DVD, CD-ROM, write-capable, and read-only memories.

The server computing device 302 can include one or more processors 310 and memory 312. The memory 312 can store information accessible by the processors 310, including instructions 314 that can be executed by the processors 310. The memory 312 can also include data 316 that can be retrieved, manipulated, or stored by the processors 310. The memory 312 can be a type of transitory or non-transitory computer readable medium capable of storing information accessible by the processors 310, such as volatile and non-volatile memory. The processors 310 can include one or more central processing units (CPUs), graphic processing units (GPUs), field-programmable gate arrays (FPGAs), and/or application-specific integrated circuits (ASICs).

The instructions 314 can include one or more instructions that, when executed by the processors 310, cause the one or more processors 310 to perform actions defined by the instructions 314. The instructions 314 can be stored in object code format for direct processing by the processors 310, or in other formats including interpretable scripts or collections of independent source code modules that are interpreted on demand or compiled in advance. The instructions 314 can include instructions for implementing the RAG workload scheduling system 318, which can correspond to the RAG workload scheduling system 200 as depicted in FIG. 2. The RAG workload scheduling system 318 can be executed using the processors 310, and/or using other processors remotely located from the server computing device 302.

The data 316 can be retrieved, stored, or modified by the processors 310 in accordance with the instructions 314. The data 316 can be stored in computer registers, in a relational or non-relational database as a table having a plurality of different fields and records, or as JSON, YAML, proto, or XML documents. The data 316 can also be formatted in a computer-readable format such as, but not limited to, binary values, ASCII, or Unicode. Moreover, the data 316 can include information sufficient to identify relevant information, such as numbers, descriptive text, proprietary codes, pointers, references to data stored in other memories, including other network locations, or information that is used by a function to calculate relevant data.

The client computing device 304 can also be configured similarly to the server computing device 302, with one or more processors 320, memory 322, instructions 324, and data 326. The client computing device 304 can also include a user input 328 and a user output 330. The user input 328 can include any appropriate mechanism or technique for receiving input from a user, such as keyboard, mouse, mechanical actuators, soft actuators, touchscreens, microphones, and sensors.

The server computing device 302 can be configured to transmit data to the client computing device 304, and the client computing device 304 can be configured to display at least a portion of the received data on a display implemented as part of the user output 330. The user output 330 can also be used for displaying an interface between the client computing device 304 and the server computing device 302. The user output 330 can alternatively or additionally include one or more speakers, transducers or other audio outputs, a haptic interface or other tactile feedback that provides non-visual and non-audible information to the platform user of the client computing device 304.

Although FIG. 3 illustrates the processors 310, 320 and the memories 312, 322 as being within the respective computing devices 302, 304, components described herein can include multiple processors and memories that can operate in different physical locations and not within the same computing device. For example, some of the instructions 314, 324 and the data 316, 326 can be stored on a removable SD card and others within a read-only computer chip. Some or all of the instructions 314, 324 and data 316, 326 can be stored in a location physically remote from, yet still accessible by, the processors 310, 320. Similarly, the processors 310, 320 can include a collection of processors that can perform concurrent and/or sequential operations. The computing devices 302, 304 can each include one or more internal clocks providing timing information, which can be used for time measurement for operations and programs run by the computing devices 302, 304.

The server computing device 302 can be connected over the network 308 to a data center 332 housing any number of hardware resources 334. The data center 332 can be one of multiple data centers or other facilities in which various types of hardware resources 334, such as hardware accelerators, are located. Hardware resources 334 housed in the data center 332 can be specified for RAG-based models, such as for performing analytical and/or machine learning tasks, as described herein.

The server computing device 302 can be configured to receive requests to process data from the client computing device 304 on computing resources in the data center 332. For example, the environment 300 can be part of a computing platform configured to provide a variety of services to users, through various user interfaces and/or application programming interfaces (APIs) exposing the platform services. The client computing device 304 can transmit input data as part of a workload to perform an analytical and/or machine learning task. The RAG workload scheduling system 318, along with RAG-based LLMs, can receive the input data, and in response, generate output data including a response to the workload including a result for the analytical and/or machine learning task.

The server computing device 302 can maintain a variety of models in accordance with different constraints available at the data center 332. For example, the server computing device 302 can maintain different families for deploying models on various types of ASICs and/or GPUs housed in the data center 332 or otherwise available for processing.

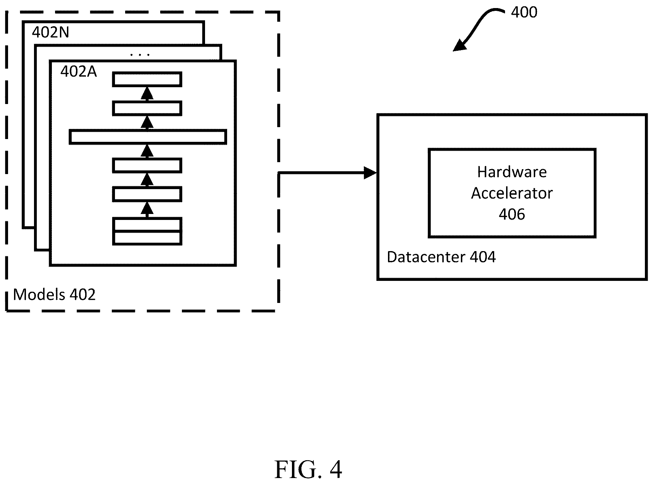

FIG. 4 depicts a block diagram 400 illustrating one or more machine learning model architectures 402 according to aspects of the disclosure. More specifically, FIG. 4 depicts architectures 402A-N for deployment in a datacenter 404 housing a hardware accelerator 406 on which the deployed machine learning models 402 will execute, such as for the variety of services as described herein. The hardware accelerator 406 can be any type of processor, such as a CPU, GPU, FPGA, and/or ASIC.

An architecture 402 of a machine learning model can refer to characteristics defining the model, such as characteristics of layers for the model, how the layers process input, or how the layers interact with one another. The architecture 402 of the machine learning model can also define types of operations performed within each layer. One or more machine learning model architectures 402 can be generated that can output results involving analytical and/or machine learning tasks. Example model architectures 402 can correspond to RAG-based LLMs, as described herein.

The machine learning models can be trained according to a variety of different learning techniques. Learning techniques for training the machine learning models can include supervised learning, unsupervised learning, semi-supervised learning, and reinforcement learning techniques. For example, training data can include multiple training examples that can be received as input by a model. The training examples can be labeled with a desired output for the model when processing the labeled training examples. The label and the model output can be evaluated through a loss function to determine an error, which can be back propagated through the model to update weights for the model. For example, a supervised learning technique can be applied to calculate an error between outputs, with a ground-truth label of a training example processed by the model. Any of a variety of loss or error functions appropriate for the type of the task the model is being trained for can be utilized, such as cross-entropy loss for classification tasks, or mean square error for regression tasks. The gradient of the error with respect to the different weights of the candidate model on candidate hardware can be calculated, for example using a backpropagation algorithm, and the weights for the model can be updated. The model can be trained until stopping criteria are met, such as a number of iterations for training, a maximum period of time, a convergence, or when a minimum accuracy threshold is met.

Referring back to FIG. 3, the devices 302, 304 and the data center 332 can be capable of direct and indirect communication over the network 308. For example, using a network socket, the client computing device 304 can connect to a service operating in the data center 332 through an Internet protocol. The devices 302, 304 can set up listening sockets that may accept an initiating connection for sending and receiving information. The network 308 can include various configurations and protocols including the Internet, World Wide Web, intranets, virtual private networks, wide area networks, local networks, and private networks using communication protocols proprietary to one or more companies. The network 308 can support a variety of short- and long-range connections. The short- and long-range connections may be made over different bandwidths, such as 2.402 GHz to 2.480 GHz, commonly associated with the Bluetooth^{®} standard, 2.4 GHz and 5 GHz, commonly associated with the Wi-Fi^{®} communication protocol; or with a variety of communication standards, such as the LTE^{®} standard for wireless broadband communication. The network 308, in addition or alternatively, can also support wired connections between the devices 302, 304 and the data center 332, including over various types of Ethernet connection.

Although a single server computing device 302, client computing device 304, storage device 306, and data center 332 are shown in FIG. 3, it is understood that aspects of the disclosure can be implemented according to a variety of different configurations and quantities of computing devices, including in paradigms for sequential or parallel processing, or over a distributed network of multiple devices. In some implementations, aspects of the disclosure can be performed on a single device connected to hardware accelerators configured for processing machine learning models, or any combination thereof.

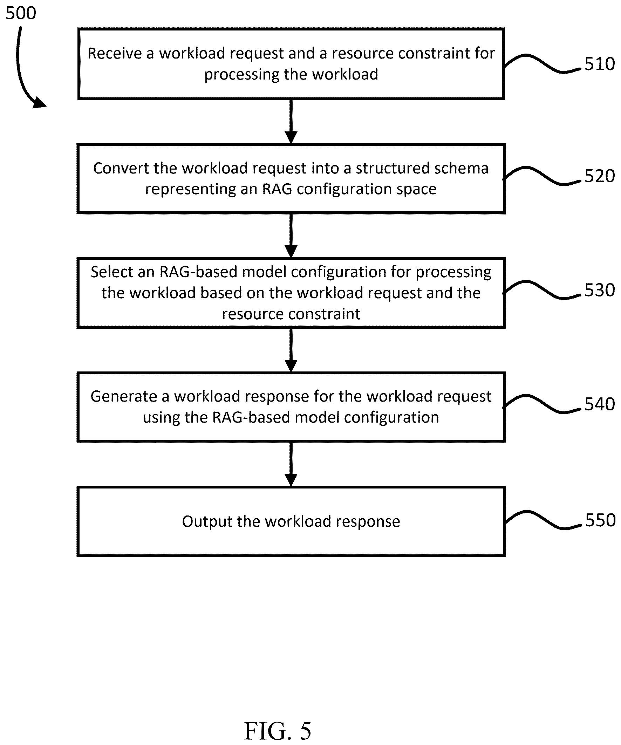

FIG. 5 depicts a flow diagram of an example process 500 for processing workloads using RAG-based models. The example process 500 can be performed on a system of one or more processors in one or more locations, such as the RAG workload scheduling system 102 and RAG-based model 104 as depicted in FIG. 1.

As shown in block 510, the RAG workload scheduling system 102 receives a workload request and a resource constraint for processing the workload. The RAG workload scheduling system 102 may receive the workload request and resource constraint from a user device. The workload request may involve one or more analytical and/or machine learning tasks, such as regression, ranking, classification, recommendation, summarization, question-answering, and/or any other analysis. The resource constraint may involve a maximum computational resource amount, a minimum quality for a workload response, a minimum speed to generate a workload response, a maximum time limit to generate a workload response, and/or other service level optimizations, as examples.

As shown in block 520, the RAG workload scheduling system 102 converts the workload request into a structured schema representing an RAG configuration space. The structured schema may include a specification of an RAG pipeline and model and retrieval configurations for the RAG pipeline. The specification of the RAG pipeline may include a database encoder stage, a query rewriter stage, a result reranker stage, an iterative retrieval stage, and a generative model stage. The model and retrieval configurations may include a model size, a database size, a number of query vectors per retrieval, and/or an iterative retrieval frequency. The RAG workload scheduling system 102 may determine relevant RAG pipeline stages and relevant configurations of the RAG pipeline stages based on the workload request.

As shown in block 530, the RAG workload scheduling system 102 selects an RAG-based model configuration for processing the workload based on the workload request converted into the structured schema and the resource constraint. The RAG workload scheduling system 102 may collocate and/or disaggregate a plurality of RAG pipeline stages based on the resource constraint, assign a type and quantity of compute resources for each of the RAG pipeline stages based on the collocation or disaggregation of the RAG pipeline stages and the resource constraint, and tune batch sizes for each of the RAG pipeline stages to balance throughput and latency for processing the workload. The RAG workload scheduling system 102 may further determine an execution order for the workload request based on the collocation or disaggregation of the RAG pipeline stages. The RAG workload scheduling system 102 may identify a performance Pareto frontier based on the workload request and the resource constraint.

As shown in block 540, the RAG-based model 104 generates a workload response for the workload using the RAG-based model configuration. The RAG-based model 104 may be an LLM augmented with a knowledge database. The RAG-based model 104 may append information from the knowledge database to the workload request in generating the workload response. The RAG-based model 104 may be configured to perform hyperscale retrieval, long-context sequence processing, iterative retrieval, and/or query rewriting and result reranking in generating the workload response.

As shown in block 550, the RAG-based model 104 outputs the workload response. The RAG-based model may provide the workload response to the user device or to a downstream device.

Processing workloads as described herein may achieve up to a 2x increase in query per second (QPS) per chip and a 55% reduction in time-to-first-token latency compared to a baseline RAG framework. The baseline RAG framework is an extension of LLM-only systems, where additional RAG components are collocated with the prefix system of the generative LLM. Rather than arbitrarily assigning chips to prefix and decode, the ratio is tuned based on time consumption. In this tuned baseline, the prefix and decode stages are allocated in a 1:1 chip ratio, reflecting their similar time requirements in the pipeline.

In a Pareto performance comparison between the framework described herein and the baseline framework in terms of queries per second over chip (QPS/Chip), the framework described herein achieves a 1.7x improvement in maximum QPS/Chip over the baseline for the long-context sequence paradigm. This speedup underscores the inefficiencies of the baseline framework, particularly in handling the encoding stage for long-context sequences. The encoder, while smaller than the generative LLM, becomes a critical bottleneck as context lengths grow. Specifically, in the baseline framework, encoding is collocated with the prefix stage, leading to a resource imbalance: decoding XPUs remain idle, while encode-prefix XPUs are overloaded. This imbalance can theoretically reduce QPS/Chip by up to 2.0x in the baseline framework, which aligns with a reduction of 1.94x for a large 10 M-token context. In contrast, the framework disclosed herein achieves high QPS/Chip by allocating 64 out of the 96 XPUs to encoding, reflecting the high time consumption of this stage.

A similar inefficiency of the baseline framework occurs with rewriting and reranking, where the rewriter and reranker models, despite their relatively small size, e.g., 8 B and 120 M, significantly impact throughput in the baseline framework. This QPS drop can be attributed to two primary factors. First, collocating the rewriter-decode stage and the prefix stage of the main generative LLM leads to XPU under-utilization due to the low computational intensity of the autoregressive decoding stage, particularly when handling small batch sizes. Second, retrieval operations introduced between the rewriting and prefix stages add wait times for retrieval results, e.g., 10 ms with a batch size of one given 32 host servers), further reducing throughput. In contrast, the framework disclosed herein demonstrates its ability to mitigate these bottlenecks through optimized task placement, resource allocation, and batching strategies. These results highlight the importance of disaggregating smaller pipeline stages and balancing resource distribution to unlock the additional throughput potential of workload processing.

Aspects of this disclosure can be implemented in digital electronic circuitry, in tangibly embodied computer software or firmware, and/or in computer hardware, such as the structure disclosed herein, their structural equivalents, or combinations thereof. Aspects of this disclosure can further be implemented as one or more computer programs, such as one or more modules of computer program instructions encoded on a tangible non-transitory computer storage medium for execution by, or to control the operation of, one or more data processing apparatus. The computer storage medium can be a machine-readable storage device, a machine-readable storage substrate, a random or serial access memory device, or combinations thereof. The computer program instructions can be encoded on an artificially generated propagated signal, such as a machine-generated electrical, optical, or electromagnetic signal, which is generated to encode information for transmission to suitable receiver apparatus for execution by a data processing apparatus.

The term "configured" is used herein in connection with systems and computer program components. For a system of one or more computers to be configured to perform particular operations or actions means that the system has installed thereon software, firmware, hardware, or a combination thereof that cause the system to perform the operations or actions. For one or more computer programs to be configured to perform particular operations or actions means that the one or more programs include instructions that, when executed by one or more data processing apparatus, cause the apparatus to perform the operations or actions.

The term "data processing apparatus" or "data processing system" refers to data processing hardware and encompasses various apparatus, devices, and machines for processing data, including programmable processors, computers, or combinations thereof. The data processing apparatus can include special purpose logic circuitry, such as a field programmable gate array (FPGA) or an application specific integrated circuit (ASIC). The data processing apparatus can include code that creates an execution environment for computer programs, such as code that constitutes processor firmware, a protocol stack, a database management system, an operating system, or combinations thereof.

The term "computer program" refers to a program, software, a software application, an app, a module, a software module, a script, or code. The computer program can be written in any form of programming language, including compiled, interpreted, declarative, or procedural languages, or combinations thereof. The computer program can be deployed in any form, including as a standalone program or as a module, component, subroutine, or other unit suitable for use in a computing environment. The computer program can correspond to a file in a file system and can be stored in a portion of a file that holds other programs or data, such as one or more scripts stored in a markup language document, in a single file dedicated to the program in question, or in multiple coordinated files, such as files that store one or more modules, sub programs, or portions of code. The computer program can be executed on one computer or on multiple computers that are located at one site or distributed across multiple sites and interconnected by a data communication network.

The term "database" refers to any collection of data. The data can be unstructured or structured in any manner. The data can be stored on one or more storage devices in one or more locations. For example, an index database can include multiple collections of data, each of which may be organized and accessed differently.

The term "engine" refers to a software-based system, subsystem, or process that is programmed to perform one or more specific functions. The engine can be implemented as one or more software modules or components or can be installed on one or more computers in one or more locations. A particular engine can have one or more computers dedicated thereto, or multiple engines can be installed and running on the same computer or computers.

The processes and logic flows described herein can be performed by one or more computers executing one or more computer programs to perform functions by operating on input data and generating output data. The processes and logic flows can also be performed by special purpose logic circuitry, or by a combination of special purpose logic circuitry and one or more computers.

A computer or special purpose logic circuitry executing the one or more computer programs can include a central processing unit, including general or special purpose microprocessors, for performing or executing instructions and one or more memory devices for storing the instructions and data. The central processing unit can receive instructions and data from the one or more memory devices, such as read-only memory, random access memory, or combinations thereof, and can perform or execute the instructions. The computer or special purpose logic circuitry can also include, or be operatively coupled to, one or more storage devices for storing data, such as magnetic, magneto optical disks, or optical disks, for receiving data from or transferring data to. The computer or special purpose logic circuitry can be embedded in another device, such as a mobile phone, a personal digital assistant (PDA), a mobile audio or video player, a game console, a Global Positioning System (GPS), or a portable storage device, e.g., a universal serial bus (USB) flash drive, as examples.

Computer readable media suitable for storing the one or more computer programs can include any form of volatile or non-volatile memory, media, or memory devices. Examples include semiconductor memory devices, e.g., EPROM, EEPROM, or flash memory devices, magnetic disks, e.g., internal hard disks or removable disks, magneto optical disks, CD-ROM disks, DVD-ROM disks, or combinations thereof.

Aspects of the disclosure can be implemented in a computing system that includes a back end component, e.g., as a data server, a middleware component, e.g., an application server, or a front end component, e.g., a client computer having a graphical user interface, a web browser, or an app, or any combination thereof. The components of the system can be interconnected by any form or medium of digital data communication, such as a communication network. Examples of communication networks include a local area network (LAN) and a wide area network (WAN), e.g., the Internet.

The computing system can include clients and servers. A client and server can be remote from each other and interact through a communication network. The relationship of client and server arises by virtue of the computer programs running on the respective computers and having a client-server relationship to each other. For example, a server can transmit data, e.g., an HTML page, to a client device, e.g., for purposes of displaying data to and receiving user input from a user interacting with the client device. Data generated at the client device, e.g., a result of the user interaction, can be received at the server from the client device.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description of the embodiments should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible embodiments. Further, the same reference numbers in different drawings can identify the same or similar elements.

## Claims

1. A method for processing workloads using retrieval augmented generation (RAG)-based models, the method comprising:
receiving, by one or more processors, a workload request and a resource constraint for processing the workload;
converting, by the one or more processors, the workload request into a structured schema representing an RAG configuration space;
selecting, by the one or more processors, an RAG-based model configuration for processing the workload based on the structured schema and the resource constraint;
generating, by the one or more processors, a workload response for the workload using the RAG-based model configuration; and
outputting, by the one or more processors, the workload response.

2. The method of claim 1, wherein the structured schema comprises a specification of an RAG pipeline and model and retrieval configurations for the RAG pipeline.

3. The method of claim 2, wherein the specification of the RAG pipeline comprises a database encoder stage, a query rewriter stage, a result reranker stage, an iterative retrieval stage, and a generative model stage; and/or
wherein the model and retrieval configurations comprise a model size, a database size, a number of query vectors per retrieval, and an iterative retrieval frequency.

4. The method of any one of claims 1 to 3, wherein converting the workload request into the structured schema further comprises determining relevant RAG pipeline stages and relevant configurations of the RAG pipeline stages based on the workload request.

5. The method of any one of claims 1 to 4, wherein selecting the RAG-based model configuration comprises:
at least one of collocating or disaggregating a plurality of RAG pipeline stages based on the resource constraint;
assigning a type and quantity of compute resources for each of the RAG pipeline stages based on the collocation or disaggregation of the RAG pipeline stages and the resource constraint; and
tuning batch sizes for each of the RAG pipeline stages to balance throughput and latency for processing the workload.

6. The method of claim 5, wherein selecting the RAG-based model configuration comprises determining an execution order for the workload request based on the collocation or disaggregation of the RAG pipeline stages.

7. The method of any one of claims 1 to 6, wherein selecting the RAG-based model configuration comprises identifying a performance Pareto frontier based on the workload request and the resource constraint; and/or
wherein the RAG-based models are large language models (LLMs) augmented with a knowledge database; and/or
wherein the RAG-based models are configured to perform at least one of hyperscale retrieval, long-context sequence processing, iterative retrieval, or query rewriting and result reranking in generating the workload response.

8. A system comprising:
one or more processors; and
one or more storage devices coupled to the one or more processors and storing instructions that, when executed by the one or more processors, cause the one or more processors to perform operations for processing workloads using retrieval augmented generation (RAG)-based models, the operations comprising:
receiving a workload request and a resource constraint for processing the workload;
converting the workload request into a structured schema representing an RAG configuration space;
selecting an RAG-based model configuration for processing the workload based on the structured schema and the resource constraint;
generating a workload response for the workload using the RAG-based model configuration; and
outputting the workload response.

9. The system of claim 8, wherein the structured schema comprises a specification of an RAG pipeline and model and retrieval configurations for the RAG pipeline.

10. The system of claim 9, wherein the specification of the RAG pipeline comprises a database encoder stage, a query rewriter stage, a result reranker stage, an iterative retrieval stage, and a generative model stage; and/or
wherein the model and retrieval configurations comprise a model size, a database size, a number of query vectors per retrieval, and an iterative retrieval frequency.

11. The system of any one of claims 8 to 10, wherein converting the workload request into the structured schema further comprises determining relevant RAG pipeline stages and relevant configurations of the RAG pipeline stages based on the workload request.

12. The system of any one of claims 8 to 11,
wherein selecting the RAG-based model configuration comprises:
at least one of collocating or disaggregating a plurality of RAG pipeline stages based on the resource constraint;
assigning a type and quantity of compute resources for each of the RAG pipeline stages based on the collocation or disaggregation of the RAG pipeline stages and the resource constraint; and
tuning batch sizes for each of the RAG pipeline stages to balance throughput and latency for processing the workload; and
wherein selecting the RAG-based model configuration optionally further comprises determining an execution order for the workload request based on the collocation or disaggregation of the RAG pipeline stages.

13. The system of any one of claims 8 to 12, wherein selecting the RAG-based model configuration comprises identifying a performance Pareto frontier based on the workload request and the resource constraint; and/or
wherein the RAG-based models are large language models (LLMs) augmented with a knowledge database.

14. A non-transitory computer readable medium storing instructions that, when executed by one or more processors, cause the one or more processors to perform the method of any one of claims 1 to 7.

15. A computer program comprising instructions that, when executed by one or more processors, cause the one or more processors to perform the method of any one of claims 1 to 7.
